# EUROPÄISCHE PATENTSCHRIFT

(11) **EP 0 667 512 B1**
(45) Veröffentlichungstag und Bekanntmachung des Hinweises auf die Patenterteilung: **12.06.1996**
(21) Anmeldenummer: 94102141.2
(22) Anmeldetag: 11.02.1994
(51) Int. Cl.: G01F 23/26

(54) **Elektrodenanordnung für kapazitive Messsysteme**
Electrode configuration for capacitive measurement systems
Configuration d'électrodes pour systèmes de mesure capacitifs

(43) Veröffentlichungstag der Anmeldung: 16.08.1995
(73) Patentinhaber: Stöckert Instrumente GmbH, D-80939 München (DE)
(72) Erfinder: Hahn, Andreas, Dipl.-Ing., D-82054 Sauerlach (DE)
(74) Vertreter: Zangs, Rainer E., Dipl.-Ing.

(56) Entgegenhaltungen:
- EP-A- 0 361 023
- DE-A- 2 031 373
- PATENT ABSTRACTS OF JAPAN vol. 18, no. 5 (P-1669) 7. Januar 1994 & JP-A-05 248 923 (TOKIMEC INC)
- PATENT ABSTRACTS OF JAPAN vol. 6, no. 88 (P-118) 26. Mai 1982 & JP-A-57 024 826 (YOKOGAWA HOKUSHIN ELECTRIC CORP)

## Beschreibung

Die vorliegende Erfindung betrifft eine Elektrodenanordnung für kapazititve Meßsysteme zur Messung des Füllstandes einer Flüssigkeit in einem Behälter.

Aus DE 88 16 840 U ist ein Füllstand-Meßsystem bekannt, das aus einer Auswerteeinheit, einer Sensorschaltung und einem Dipol besteht, der an dem zu überwachenden Behälter angebracht wird und der aus zwei auf einem Träger angeordneten Metallflächen besteht. Das Schwingverhalten der Sensorschaltung wird durch den Dipol bestimmt und ist einerseits über Anschlußelemente mit den den Dipol bildenden Metallflächen lösbar verbunden und andererseits an die Auswerteeinheit angeschlossen.

Unter der Bezeichnung "Niveau-Überwachung" ist ein Füllstand-Meßsystem der Stöckert Instrumente GmbH bekannt, das bei niedrigeren Frequenzen arbeitet und als kapazitives Meßsystem bezeichnet werden kann. Bei diesem Füllstand-Meßsystem ist ein Kondensator in einen Schwingschaltkreis integriert und bestimmt dessen Schwingverhalten, wobei dieses Meßsystem dem zuvor beschriebenen insoweit ähnelt, als der Kondensator aus zwei auf einem Träger angeordneten Metallflächen besteht, die gemeinsam mit dem Träger an dem zu überwachenden Behälter angebracht werden. Bei den Kondensatorelementen handelt es sich um vergleichsweise dünne Metallplättchen, die am Rand zur Ausbildung eines Anschlußelements abgekantet sind. Diese Metallelektroden werden an einem Kunststoffträger befestigt, so daß die Anschlußelemente den Körper des Trägers durchdringen und die Möglichkeit bieten, die Schwingkreisschaltung auf einer Seite des Trägers anzuordnen. Auf der gegenüberliegenden Seite liegen dann die Kondensatorelektroden flach am Träger an und werden gemeinsam mit dem Träger unter Verwendung eines Klebefilms am Behälter befestigt.

Die Herstellung der Elektrodenanordnung bestehend aus Kondensatorelektroden, Anschlußelementen und Träger ist sehr aufwendig, da die Teile einzeln angefertigt, bearbeitet und zusammengesetzt werden müssen. Insbesondere das Einsetzen der Kondensatorelektroden in den Träger stellt hohe Anforderungen an die Bearbeitungsgenauigkeit und ist einer maschinellen Bearbeitung kaum zugänglich. Ungenauigkeiten bei der Positionierung der Kondensatorelektroden könnten nur mit verhältnismäßig großen Aufwand vermieden werden. Wird eine Kondensatorelektrode ungenau angeordnet, kommt es nicht nur zu einer Beeinträchtigung der elektrischen Eigenschaften, sondern auch zu der Gefahr, daß das Anschlußelement beim Anschließen der Schwingkreisschaltung beschädigt wird.

Davon ausgehend liegt der vorliegenden Erfindung die Aufgabe zugrunde, eine Elektrodenanordnung für kapazitive Meßsysteme der eingangs genannten Art zu schaffen, die einfacher und wirtschaftlicher herzustellen ist, ohne daß die elektrischen Eigenschaften, insbesondere die kapazitive Wirkung unverhältnismäßig beeinträchtigt werden, und bei der die Kontaktgabe zur Sensorschaltung sicherer gestaltet ist.

Gelöst wird diese Aufgabe durch eine Elektrodenanordnung für kapazitive Meßsysteme zur Messung des Füllstandes einer Flüssigkeit in einem Behälter, mit einem Träger, Kondensator-Elektroden, die an einer ersten Oberfläche eines Trägers angeordnet sind, Anschlußelementen, über die eine Sensorschaltung des Meßsystems unter Anordnung der Sensorschaltung an einer zweiten Oberfläche des Trägers elektrisch an die Kondensator-Elektroden anschließbar ist, und einer Befestigungseinrichtung zum Befestigen der Elektrodenanordnung an dem Behälter, die sich erfindungsgemäß dadurch auszeichnet, daß die Kondensator-Elektroden und die Anschlußelemente aus zumindest einem elektrische Leitfähigkeit bereitstellenden Kunststoffkörper gebildet werden.

Der Kunststoffkörper kann aus einem leitfähigen Kunststoff bestehen oder eine leitfähige Oberflächenbeschichtung aufweisen.

Der Träger weist vorteilhaft in der ersten Oberfläche Vertiefungen zur Aufnahme der die Kondensator-Elektroden bildenden Kunststoffkörper und Öffnungen für den Durchtritt der die Anschlußelemente bildenden Kunststoffkörper von der ersten Oberfläche zur zweiten Oberfläche des Trägers auf. Diese Ausgestaltung fördert insbesondere die leichte Montierbarkeit der Elektroden/Anschlußelement-Einheit am Träger. Alternativ können für jede der Kondensator-Elektroden sowie jedes der Anschlußelemente ein Kunststoffkörper vorgesehen sein oder es kann jeweils für eine der Kondensator-Elektroden und eines der Anschlußelemente ein einstückiger Kunststoffkörper vorgesehen werden. Die Anschlußelemente erstrecken sich im wesentlichen senkrecht zu den Kondensatorelektroden; an ihnen können Führungen zur mechanischen Unterstützung des elektrischen Anschlusses der Sensorschaltung angeformt sein.

Bei der Befestigungseinrichtung handelt es sich vorteilhaft um eine Klebeschicht auf der ersten Oberfläche des Trägers.

Die Erfindung beruht auf der Erkenntnis, daß die Rohteilfertigung, -bearbeitung und -montage der herkömmlichen Kondensator-Elektroden/Anschlußelemente aus Metall die Ursache der meisten Probleme bei den bekannten Elektrodenanordnungen darstellt. Die Realisierung der Kondensator-Elektroden/Anschlußelemente in Form eines Kunststoff-Körpers, dessen leitfähige Eigenschaften durch eine leitfähige Beimischung oder einen leitfähigen Überzug erreicht werden, eröffnet die Möglichkeit einer kostengünstigen, aber dennoch formgenauen Herstellung dieser Elemente der Elektrodenanordnung. Durch die Materialwahl können größere Abmessungen gewählt werden, was die Montierbarkeit erleichtert, insbesondere da am Träger Vertiefungen vorgesehen werden können, in die der Kunststoffkörper der Kondensator-Elektroden und der Anschlußelemente eingesetzt werden kann. Es wurde festgestellt, daß die durch leitfähige Beimischung oder leitfähigen Überzug erreichbaren elektrischen Werte den Anforderungen eines kapazitiven Meßsystems zur Füllstandsmessung durchaus gerecht werden, insbesondere wenn bei vergleichsweise niedrigen Frequenzen (<< 50 MHz) gearbeitet wird.

Im folgenden wird die Erfindung anhand von Ausführungsbeispielen und unter Bezugnahme auf die Zeichnungen genauer beschrieben, in denen zeigt:
- Fig. 1: ein Ausführungsbeispiel der erfindungsgemäßen Elektrodenanordnung mit getrennt voneinander dargestellten Einzelbestandteilen in perspektivischer Darstellung;
- Fig. 2: ein weiteres Ausführungsbeispiel der erfindungsgemäßen Elektrodenanordnung in einer Aufsicht;
- Fig. 3: ein Schnittbild des zweiten Ausführungsbeispiels entlang der Linie A-A in Fig. 2; und
- Fig. 4A und 4B: Ausführungsbeispiele für die Formgestaltung der Anschlußelemente in vergrößerter Darstellung.

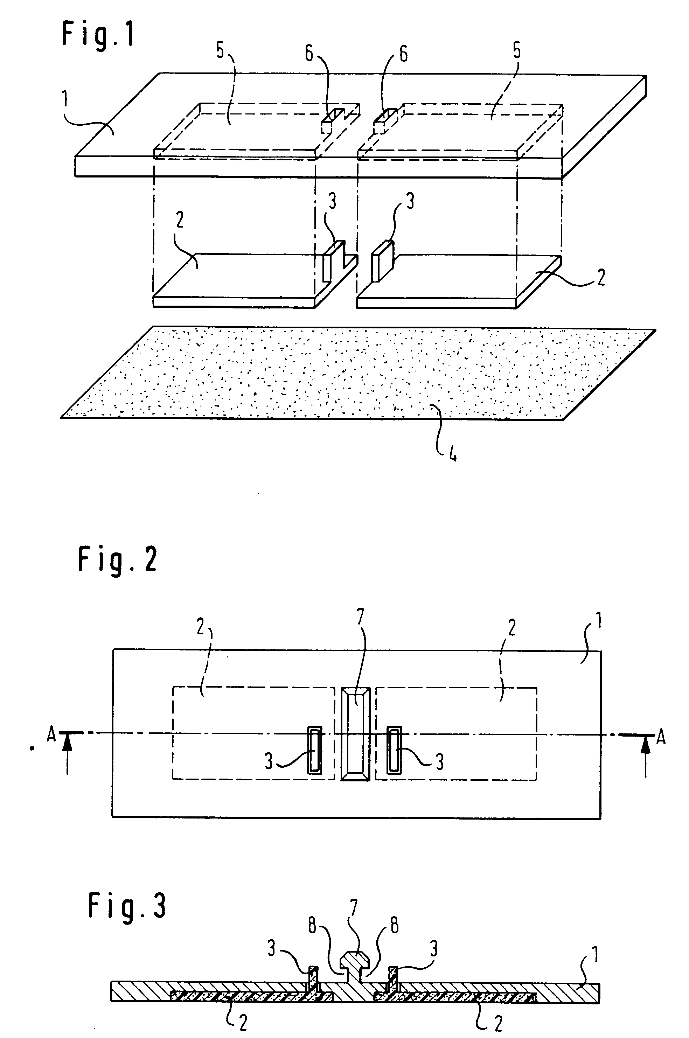

Bei dem in Fig. 1 gezeigten Ausführungsbeispiel sind die Bestandteile der erfindungsgemäßen Elektrodenanordnung getrennt voneinander, aber in räumlicher Zuordnung zueinander dargestellt. Die Elektrodenanordnung besteht aus dem Träger 1, den Kondensator-Elektroden 2, den Anschlußelementen 3 und der Klebeschicht 4. Die Anschlußelemente 3 sind einstückig mit den Kondensatorelektroden 2 ausgebildet und erstrecken sich senkrecht zur Ebene der Kondensatorelektroden. Im Träger 1 sind Vertiefungen 5 zur Aufnahme der Kondensatorelektroden 2 vorgesehen. Im zusammengesetzten Zustand liegen die Kondensatorelektroden 2 in den Vertiefungen 5; dabei erstrecken sich die Anschlußelemente 3 durch im Träger ausgebildete Öffnungen 6. An den herausragenden Enden der Anschlußelemente 3 kann eine Sensorschaltung angeschlossen werden, die an die Anschlußelemente 3 angepaßte Kontakte aufweist. Der mit Hilfe der Kondensatorelektroden 2 gebildete Kondensator wird auf diese Weise in den Schaltkreis der Sensorschaltung als ein z.B. den Schwingzustand bestimmendes Bauteil einbezogen. Die Klebeschicht 4, die auf der Seite der Vertiefungen 5 des Trägers 1 nach dem Einlegen der Kondensatorelektroden 2 vorgesehen wird, dient in erster Linie zur Befestigung des Trägers 1 an einem Behälter, dessen Füllstand zu detektieren ist. Gleichzeitig kann die Klebeschicht 4 so ausgelegt werden, daß sie auch die Kondensatorelektroden 2 in den Vertiefungen 5 fixiert. Die Halterung der Kondensatorelektroden kann aber auch über eine geeignete Passung realisiert werden.

Erfindungsgemäß sind die Kondensatorelektroden 2 und die Anschlußelemente 3 aus Kunststoff hergestellt. Um der Funktion als Kondensatorelektrode bzw. Anschlußelement gerecht zu werden, müssen die Kunststoffkörper die für diese Funktion erforderliche elektrische Eigenschaften bereitstellen. Dies wird erreicht durch Verwendung eines leitfähigen Kunststoffs oder durch Aufbringen eines leitfähigen Überzugs auf die Kondensatorelektroden und die Anschlußelemente. Die Verwendung eines leitfähigen Kunststoffs hat den Vorteil, daß die Kondensatorelektroden 2 und die Anschlußelemente 3 fertigungstechnisch einfach durch ein Spritzverfahren hergestellt werden können. Dies gilt umso mehr, wenn die in Fig. 1 gezeigte einstückige Ausgestaltung gewählt wird. Jedoch können die Anschlußelemente 3 auch getrennt von den Kondensatorelektroden 2 und ggf. aus anderem Material angefertigt und dann an den Kondenatoreelektroden 2 befestigt werden.

Der Zusammenbau der erfindungsgemäßen Elektrodenanordnung gestaltet sich einfach, da durch die Vertiefungen 5 im Träger 1 die Lage der Kondensatorelektroden 2 mit vergleichsweise großer Genauigkeit vorbestimmt wird. Die Abmessungen der Vertiefungen 5 können entsprechend gewählt werden. Überdies tragen die Anschlußelemente 3 dazu bei, daß die Kondensatorelektroden 2 sicher in die Vertiefungen 5 eingesetzt werden können.

In Fig. 2 ist ein zweites Ausführungsbeispiel der erfindungsgemäßen Elektrodenanordnung gezeigt, bei dem am Träger 1 ein Vorsprung 7 mit zwei Gleitnuten 8 zwischen den Anschlußelementen 3 angeordnet ist. In Fig. 3 ist das zweite Ausführungsbeispiel in einer geschnittenen Darstellung gezeigt. Während beim ersten Ausführungsbeispiel die Sensorschaltung mit Hilfe der Anschlußelemente 3 nicht nur an den Kondensatorelektroden angeschlossen, sondern auch mechanisch fixiert wird, erfolgt die Befestigung eines die Sensorschaltung aufnehmenden Gehäuses mit Hilfe des Vorsprungs 7. Das Gehäuse der Sensorschaltung weist eine zur Form des Vorsprungs 7 komplementär ausgestaltete Nut auf, die auf zumindest einer Seite geöffnet ist, so daß der Vorsprung 7 in die Nut eingesteckt und das Gehäuse am Vorsprung 7 entlang verschoben werden kann. Dabei gleiten die Anschlußelemente 3 in entsprechend ausgestaltete Kontakte der Sensorschaltung bzw. des Sensorschaltungsgehäuses. Vorzugsweise sind die Anschlußelemente dann, wie in Fig. 2 gezeigt, außen-mittig an einer Schmalseite der Kondensatorelektrode 2 angeordnet. Dadurch wird erreicht, daß der oberhalb der Linie A-A liegende Teil des Vorsprungs 7 zunächst eine sichere Führung des am Träger zu befestigenden Gehäuses gewährleistet, bevor die Kontakte der Sensorschaltung mit den Anschlußelementen 3 in Berührung gebracht werden. Dadurch ist eine geradlinige Bewegung des Gehäuses beim Befestigen der Sensorschaltung gewahrleistet und die Gefahr einer Beschädigung der Anschlußelemente 3 reduziert.

In der Darstellung der Fig. 3 erkennt man ferner die Lage der Kondensatorelektroden 2 in den Vertiefungen des Trägers 1 sowie das Hindurchtreten der Anschlußelemente 3 durch den Träger, so daß die Anordnung der Sensorschaltung auf der Seite des Trägers erfolgt, die der Seite mit den Vertiefungen bzw. den Kondensatorelektroden gegenüberliegt.

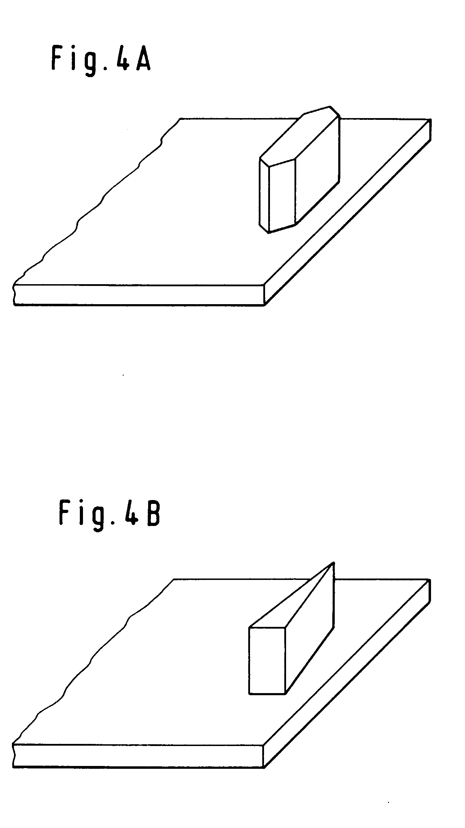

In den Fig. 4A und 4B sind zwei mögliche Formen der Anschlußelemente 3 gezeigt, die eine verbesserte Kontaktgabe bzw. eine mechanische Führung bewirken. In Fig. 4A sind an den Schmalseiten des bisher stets quaderförmig gezeigten Anschlußelements 3 keilförmige Abschnitte angeformt, die ein Gleiten des Anschlußelements in die Kontaktelemente der Sensorschaltung bei der im Zusamenhang mit den Figuren 2 und 3 erläuterten Verschiebung des Gehäuses vereinfachen. Durch die keilförmige Ausgestaltung an beiden schmalen Seiten ist die Wirkung unabhängig von der Richtung der Bewegung. Das in Fig. 4B gezeigte Beispiel eines keilförmigen Anschlußelements 3 setzt eine bestimmte Bewegungsrichtung voraus, gewährleistet aber gleichzeitig eine sichere Kontaktgabe, da der gesamte Keil des Anschlußelements 3 bis zu seiner Grundbreite für die Erzielung eines festen Sitzes des Anschlußelements im Kontaktelement der Sensorschaltung zur Verfügung steht.

Bei beiden in den Fig. 4A und 4B gezeigten Beispielen handelt es sich um Anschlußelemente, die ein Einfädeln in ein entsprechendes Kontaktelement der Sensorschaltung unterstützten. Insbesondere beim zweiten Beispiel ist jedoch eine lagerichtige Anordnung im Träger entscheidend.

Unterstützend wirkt hier die außer-mittige Anordnung des Anschlußelements an einer Schmalseite der Kondensatorelektrode. Dadurch entstehen zwei unterschiedliche Kunststoffkörper, die in nur jeweils eine der Vertiefungen im Träger 1 eingesetzt werden können, da nur in einer der Vertiefungen die Öffnung 6 an der richtigen Stelle liegt. Ein Vertauschen ist dadurch ausgeschlossen, so daß die Anordnung des keilförmigen Anschlußelements stets entsprechend der Bewegung des später am Träger zu befestigenden Gehäuses erfolgt.

## Patentansprüche

1. Elektrodenanordnung für kapazitive Meßsysteme zur Messung des Füllstandes einer Flüssigkeit in einem Behälter mit
- einem Träger (1),
- Kondensator-Elektroden (2), die an einer ersten Oberfläche des Trägers (1) anogeordnet sind,
- Anschlußelementen (3), über die eine Sensorschaltung des Meßsystems unter Anordnung der Sensorschaltung an einer zweiten Oberfläche des Trägers (1) elektrisch an die Kondensator-Elektroden (2) anschließbar ist, und
- einer Befestigungseinrichtung zum Befestigen der Elektrodenanordnung an dem Behälter,
dadurch **gekennzeichnet**, daß
- die Kondensator-Elektroden (2) und die Anschlußelemente (3) aus zumindest einem elektrische Leitfähigkeit bereitstellenden Kunststoffkörper gebildet werden.

2. Elektrodenanordnung nach Anspruch 1,
dadurch **gekennzeichnet**, daß
die Kunststoffkörper aus einem leitfähigen Kunststoff bestehen.

3. Elektrodenanordnung nach Anspruch 1,
dadurch **gekennzeichnet**, daß
die Kunststoffkörper eine leitfähige Oberflächenbeschichtung aufweisen.

4. Elektrodenanordnung nach einem der vorangegangenen Ansprüche,
dadurch **gekennzeichnet**, daß
der Träger (1) in der ersten Oberfläche Vertiefungen (5) zur Aufnahme der die Kondensator-Elektroden (2) bildenden Kunststoffkörper und Öffnungen (6) für den Durchtritt der die Anschlußelemente (5) bildenden Kunststoffkörper von der ersten Oberfläche zur zweiten Oberfläche des Trägers (1) aufweist.

5. Elektrodenanordnung nach einem der Ansprüche 1 bis 4,
dadurch **gekennzeichnet**, daß
für jede der Kondensator-Elektroden (2) und jedes der Anschlußelemente (3) ein Kunststoffkörper vorgesehen ist, die miteinander verbunden sind.

6. Elektrodenanordnung nach einem der Ansprüche 1 bis 4,
dadurch **gekennzeichnet**, daß
für jeweils eine der Kondensator-Elektroden (2) und eines der Anschlußelemente (3) ein einstückiger Kunsttoffkörper vorgesehen ist.

7. Elektrodenanordnung nach einem der vorangegangenen Ansprüche,
dadurch **gekennzeichnet**, daß
die Anschlußelemente (3) sich im wesentlichen senkrecht zu den Kondensator-Elektroden (2) erstrecken.

8. Elektrodenanordnung nach einem der vorangegangenen Ansprüche,
dadurch **gekennzeichnet**, daß
an den Anschlußelementen (3) Führungen (7, 8) zur mechanischen Unterstützung des elektrischen Anschlusses der Sensorschaltung angeformt sind.

9. Elektrodenanordnung nach einem der vorangegangenen Ansprüche,
dadurch **gekennzeichnet**, daß
als Befestigungseinrichtung eine Klebeschicht (4) auf der ersten Oberfläche des Trägers (1) vorgesehen ist.

## Claims

1. Electrode assembly for capacitive measuring systems for measuring the level of a liquid in a receptacle with
- a support (1),
- capacitor electrodes (2) which are arranged on a first surface of the support (1),
- terminal elements (3) by which a sensor circuit of the measuring system can be electrically connected to the capacitor electrodes (2), arranging the sensor circuit on a second surface of the support (1), and
- a fixing device for fixing the electrode assembly to the receptacle,
characterised in that
- the capacitor electrodes (2) and the terminal elements (3) are formed from at least one plastic body providing electrical conductivity.

2. Electrode assembly according to claim 1, characterised in that the plastic bodies are made of a conductive plastic.

3. Electrode assembly according to claim 1, characterised in that the plastic bodies comprise a conductive surface coating.

4. Electrode assembly according to any of the preceding claims, characterised in that the support (1) in the first surface comprises recesses (5) for receiving the plastic bodies which form the capacitor electrodes (2), and openings (6) for passage of the plastic bodies which form the terminal elements (5) from the first surface to the second surface of the support (1).

5. Electrode assembly according to any of claims 1 to 4, characterised in that for each of the capacitor electrodes (2) and each of the terminal elements (3) there is provided a plastic body, which are connected to each other.

6. Electrode assembly according to any of claims 1 to 4, characterised in that for in each case one of the capacitor electrodes (2) and one of the terminal elements (3) there is provided a one-piece plastic body.

7. Electrode assembly according to any of the preceding claims, characterised in that the terminal elements (3) extend essentially perpendicularly to the capacitor electrodes (2).

8. Electrode assembly according to any of the preceding claims, characterised in that guides (7, 8) for mechanically assisting electrical connection of the sensor circuit are formed integrally with the terminal elements (3).

9. Electrode assembly according to any of the preceding claims, characterised in that an adhesive layer (4) is provided on the first surface of the support (1) as the fixing device.

## Revendications

1. Agencement d'électrodes pour des systèmes de mesure capacitifs destinés à mesurer le niveau de remplissage d'un liquide dans un réservoir, comprenant
- un support (1),
- des électrodes de condensateur (2) qui sont disposées sur une première surface du support (1),
- des éléments de connexion (3) par l'intermédiaire desquels un circuit de détecteur du système de mesure disposé sur une seconde surface du support (1), peut être connecté électriquement aux électrodes de condensateur (2), et
- un dispositif de fixation destiné à fixer l'agencement d'électrodes au réservoir,
caractérisé en ce que
- les électrodes de condensateur (2) et les éléments de connexion (3) sont formés par au moins un corps de matière plastique offrant une possibilité de conductibilité électrique.

2. Agencement d'électrodes selon la revendication 1, caractérisé en ce que les corps de matière plastique sont réalisés en une matière plastique électriquement conductrice.

3. Agencement d'électrodes selon la revendication 1, caractérisé en ce que les corps de matière plastique présentent un revêtement de surface électriquement conducteur.

4. Agencement d'électrodes selon l'une des revendications précédentes, caractérisé en ce que le support (1) présente, dans la première surface, des creux (5) destinés à recevoir les corps de matière plastique formant les électrodes de condensateur (2), et des ouvertures (6), pour le passage de la première surface à la seconde surface du support (1), des corps de matière plastique formant les éléments de connexion (3).

5. Agencement d'électrodes selon l'une des revendications 1 à 4, caractérisé en ce que pour chacune des électrodes de condensateur (2) et chacun des éléments de connexion (3) est prévu un corps de matière plastique, ceux-ci étant reliés l'un à l'autre.

6. Agencement d'électrodes selon l'une des revendications 1 à 4, caractérisé en ce que pour chaque ensemble formé d'une électrode de condensateur (2) et d'un élément de connexion (3) est prévu un corps de matière plastique d'un seul tenant.

7. Agencement d'électrodes selon l'une des revendications précédentes, caractérisé en ce que les éléments de connexion (3) s'étendent sensiblement de manière perpendiculaire aux électrodes de condensateur (2).

8. Agencement d'électrodes selon l'une des revendications précédentes, caractérisé en ce que sur les éléments de connexion (3) sont formés des guidages (7, 8) destinés à contribuer mécaniquement à la réalisation de la connexion électrique du circuit de détecteur.

9. Agencement d'électrodes selon l'une des revendications précédentes, caractérisé en ce qu'en guise de dispositif de fixation est prévue une couche de colle (4), sur la première surface du support (1).
